# EUROPEAN PATENT APPLICATION

(11) **EP 4 733 556 A1**
(43) Date of publication of application: **29.04.2026**
(21) Application number: 25210866.7
(22) Date of filing: 23.10.2025
(51) Int. Cl.: F01M 1/12, F01D 25/20, F02C 7/06

(54) **SCAVENGE PUMP ASSEMBLY FOR AN AIRCRAFT ENGINE OIL SYSTEM**

(30) Priority: 25.10.2024 US 202418927400
(71) Applicant: PRATT & WHITNEY CANADA CORP., Longueuil, Québec J4G 1A1 (CA)
(72) Inventor: BAKER-OSTIGUY, Simon, (01BE5) Longueuil J4G 1A1 (CA); LABBE, Michel, (01BE5) Longueuil J4G 1A1 (CA); GIGNAC, Stephane, (01BE5) Longueuil J4G 1A1 (CA)
(74) Representative: Dehns

(57) **Abstract**

An engine includes an engine oil system. The engine oil system includes a pump assembly (70) forming a portion of an oil flow path. The pump assembly (70) includes a drive shaft (72), a plurality of pumps (76), and a pump housing (74). The drive shaft (72) extends along a rotational axis (82). The plurality of pumps (76) are arranged axially along the rotational axis (82). Each of the plurality of pumps (76) includes a pump rotor (104) coupled with the drive shaft (72). The pump housing (74) extends along the rotational axis (82) between a first housing end (86) and a second housing end (88). The pump housing (74) circumscribes and houses the drive shaft (72) and the plurality of pumps (76) between the first housing end (86) and the second housing end (88). The pump housing (74) includes a plurality of housing body portions (90A-E) axially stacked along the rotational axis (82) to form the pump housing (74). The plurality of housing body portions (90A-E) collectively form an internal oil passage (92) through the pump housing (74).

## Description

### TECHNICAL FIELD

This disclosure relates to engine oil systems for aircraft engines.

### BACKGROUND OF THE ART

Engines for aircraft may typically include rotational equipment configured for facilitating aircraft propulsion, generating electrical power, and/or other functions of aircraft operation. In many cases, rotational equipment may require lubrication and/or cooling, for example, using one or more oil systems to distribute oil to the rotational equipment and/or other oil loads. Various engine oil systems are known in the art. While these known systems may be useful for their intended purposes, there is always room in the art for improvement.

### SUMMARY

It should be understood that any or all of the features or embodiments described herein can be used or combined in any combination with each and every other feature or embodiment described herein unless expressly noted otherwise.

According to one aspect, there is provided an engine for an aircraft propulsion system that includes an engine oil system. The engine oil system includes a pump assembly forming a portion of an oil flow path through the engine oil system. The pump assembly includes a drive shaft, a plurality of pumps, and a pump housing. The drive shaft extends along a first rotational axis. The plurality of pumps are arranged axially along the first rotational axis. Each of the plurality of pumps includes a pump rotor coupled with the drive shaft. The pump housing extends along the first rotational axis between a first housing end and a second housing end. The pump housing circumscribes and houses the drive shaft and the plurality of pumps between the first housing end and the second housing end. The pump housing includes a plurality of housing body portions axially stacked along the first rotational axis to form the pump housing. The plurality of housing body portions collectively form an internal oil passage through the pump housing.

In any of the above and herein, the engine may further include an engine rotational assembly including an engine shaft and a rotor, the rotor may be coupled with the engine shaft, the engine rotational assembly may be rotatable about a second rotational axis, and the engine shaft may be coupled with the drive shaft.

In any of the above and herein, the engine may further include a gear train coupling the drive shaft with the engine shaft.

In any of the above and herein, the plurality of housing portions may form the internal oil passage extending axially through each of the plurality of housing portions.

In any of the above and herein, the pump housing may form a pump cavity for the pump rotor of each of the plurality of pumps, and the internal oil passage may be disposed radially outward of the pump cavity for the pump rotor of each of the plurality of pumps.

In any of the above and herein, the internal oil passage may be connected in fluid communication with the pump cavity for the pump rotor of each of the plurality of pumps.

In any of the above and herein, the pump housing may include a first bearing mounted on a first housing body portion of the plurality of housing body portions, the first bearing may rotationally support the drive shaft, and the internal oil passage may be connected in fluid communication with the first bearing.

In any of the above and herein, the internal oil passage may include a first passage segment and a second passage segment, the first passage segment may extend radially through the first housing body portion and may be connected in fluid communication with the first bearing, and the second passage segment may extend axially through each of the plurality of housing body portions and may be connected in fluid communication with the first passage segment.

In any of the above and herein, the pump housing may include a second bearing mounted on a second housing body portion of the plurality of housing body portions, the second bearing may rotationally support the drive shaft, and the internal oil passage may be connected in fluid communication with the second bearing.

In any of the above and herein, the pump housing may include a plurality of annular seals, each of the plurality of annular seals may be positioned axially between each axially adjacent pair of the plurality of housing body portions, and the internal oil passage may extend axially through each of the plurality of housing portions radially inside of the plurality of annular seals.

According to another aspect, which the Applicant expressly reserves the right to claim independently, an engine for an aircraft propulsion system includes an engine oil system. The engine oil system includes a pump assembly forming a portion of an oil flow path through the engine oil system. The pump assembly includes a drive shaft, a plurality of pumps, and a pump housing. The drive shaft extends along a first rotational axis. The plurality of pumps are arranged axially along the first rotational axis. Each of the plurality of pumps includes a pump rotor coupled with the drive shaft. The pump housing extends along the first rotational axis between a first housing end and a second housing end. The pump housing circumscribes and houses the drive shaft and the plurality of pumps between the first housing end and the second housing end. The pump housing includes a plurality of housing body portions axially stacked along the first rotational axis to form the pump housing. The plurality of housing body portions forms a pump cavity for the pump rotor of each of the plurality of pumps. The plurality of housing body portions collectively form an internal oil passage through the pump housing. The internal oil passage is disposed radially outward of the pump cavity for the pump rotor of each of the plurality of pumps.

In any of the above and herein, the plurality of housing portions may form the internal oil passage extending axially through each of the plurality of housing portions.

In any of the above and herein, the pump housing may include a plurality of annular seals, each of the plurality of annular seals may be positioned axially between each axially adjacent pair of the plurality of housing body portions, and the internal oil passage may extend axially through each of the plurality of housing portions radially inside of the plurality of annular seals.

In any of the above and herein, the internal oil passage may extend to an exterior of the pump housing.

In any of the above and herein, the engine may further include an engine rotational assembly including an engine shaft and a rotor, the rotor may be coupled with the engine shaft, the engine rotational assembly may be rotatable about a second rotational axis, and the engine shaft may be coupled with the drive shaft.

According to another aspect, which the Applicant expressly reserves the right to claim independently, an engine for an aircraft propulsion system includes an engine oil system. The engine oil system includes a pump assembly forming a portion of an oil flow path through the engine oil system. The pump assembly includes a drive shaft, a plurality of pumps, and a pump housing. The drive shaft extending along a first rotational axis. The plurality of pumps are arranged axially along the first rotational axis. Each of the plurality of pumps includes a pump rotor coupled with the drive shaft. The pump housing extends along the first rotational axis between a first housing end and a second housing end. The pump housing circumscribes and houses the drive shaft and the plurality of pumps between the first housing end and the second housing end. The pump housing includes a plurality of housing body portions axially stacked along the first rotational axis to form the pump housing. The plurality of housing body portions collectively form an internal oil passage through the pump housing. The internal passage includes a plurality of passage segments. At least one of the plurality of passage segments extends axially through the plurality of housing portions.

In any of the above and herein, the pump housing may include a plurality of annular seals, each of the plurality of annular seals may be positioned axially between each axially adjacent pair of the plurality of housing body portions, and the internal oil passage may extend axially through each of the plurality of housing portions radially inside of the plurality of annular seals.

In any of the above and herein, at least one of the passage segments may extend to an exterior of the pump housing.

In any of the above and herein, the engine may further include an engine rotational assembly including an engine shaft and a rotor, the rotor may be coupled with the engine shaft, the engine rotational assembly may be rotatable about a second rotational axis, and the engine shaft may be coupled with the drive shaft.

In any of the above and herein, the pump housing may form a pump cavity for the pump rotor of each of the plurality of pumps, and each of the passage segments may be disposed radially outward of the pump cavity for the pump rotor of each of the plurality of pumps.

The present disclosure, and all its aspects, embodiments and advantages associated therewith will become more readily apparent in view of the detailed description provided below, including the accompanying drawings.

### DESCRIPTION OF THE DRAWINGS

FIG. 1 illustrates a perspective view of an aircraft including a propulsion system, in accordance with one or more embodiments of the present disclosure.
FIG. 2 schematically illustrates a cutaway, side view of an aircraft propulsion system including a gas turbine engine, in accordance with one or more embodiments of the present disclosure.
FIG. 3 schematically illustrates an engine oil system for an aircraft propulsion system, in accordance with one or more embodiments of the present disclosure.
FIG. 4 schematically illustrates a cutaway, side view of a scavenge pump assembly for the engine oil system, in accordance with one or more embodiments of the present disclosure.
FIG. 5 illustrates a perspective view of the scavenge pump assembly, in accordance with one or more embodiments of the present disclosure.
FIG. 6 schematically illustrates another cutaway, side view of the scavenge pump assembly, in accordance with one or more embodiments of the present disclosure.
FIG. 7 schematically illustrates another cutaway, side view of the scavenge pump assembly, in accordance with one or more embodiments of the present disclosure.

### DETAILED DESCRIPTION

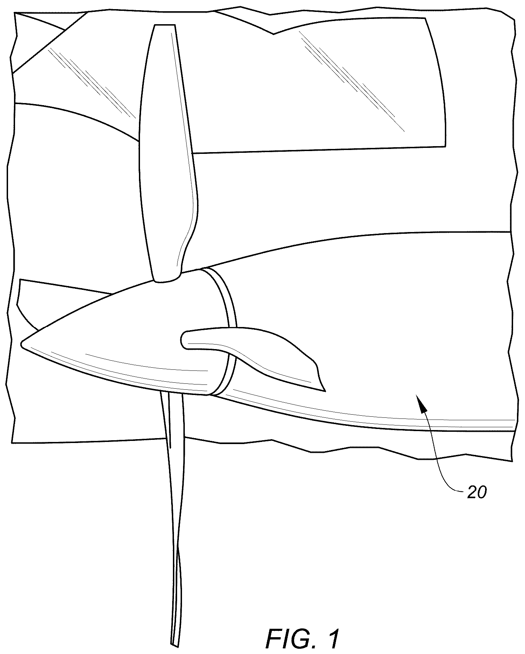

FIG. 1 illustrates a propulsion system 20 for an aircraft. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

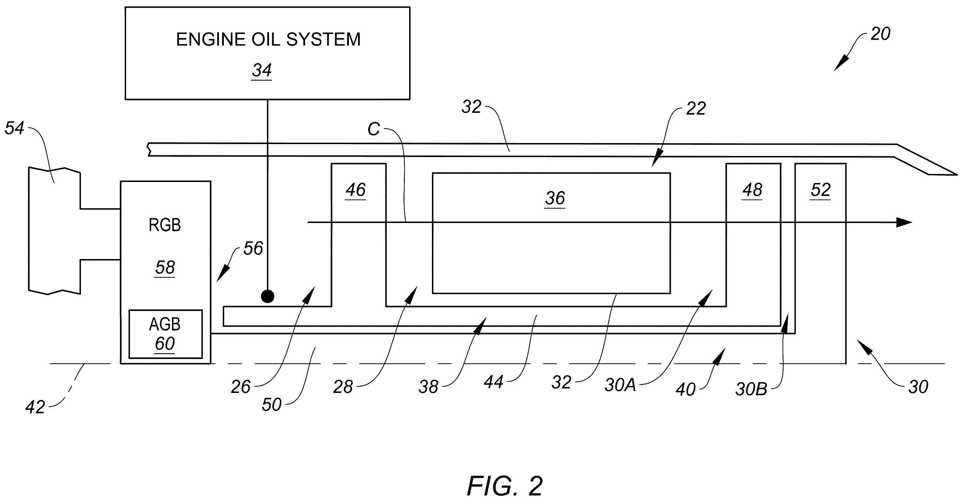

FIG. 2 schematically illustrates a cutaway, side view of the propulsion system 20. The propulsion system 20 of FIG. 2 includes a gas turbine engine 22. The gas turbine engine 22 of FIG. 2 is configured as a turboprop gas turbine engine. However, while the following description and accompanying drawings may refer to the turboprop gas turbine engine 22 of FIG. 2 as an example, it should be understood that aspects of the present disclosure may be equally applicable to other types of gas turbine engines including, but not limited to, a turboshaft gas turbine engine, a turbofan gas turbine engine, a turbojet gas turbine engine, a propfan gas turbine engine, or an open rotor gas turbine engine. Aspects of the present disclosure may be equally applicable to aircraft propulsion systems including other engine configurations such as, but not limited to, rotary engines, piston engines, and the like, or to electric aircraft propulsion systems (e.g., battery-electric propulsion systems, fuel-cell-electric propulsion systems, etc.). Aspects of the present disclosure may also be equally applicable to aircraft engines which are not part of a propulsion system, for example, an engine for an auxiliary power unit (APU).

The gas turbine engine 22 of FIG. 2 includes a compressor section 26, a combustor section 28, a turbine section 30, an engine static structure 32, and an engine oil system 34. The combustor section 28 includes a combustor 36 (e.g., an annular combustor). The turbine section 30 of FIG. 2 includes a high-pressure turbine (HPT) section 30A and a low-pressure turbine (LPT) section 30B.

Components of the compressor section 26 and/or the turbine section 30 form a first rotational assembly 38 (e.g., a high-pressure spool) and a second rotational assembly 40 of the gas turbine engine 22. The first rotational assembly 38 and the second rotational assembly 40 are mounted for rotation about a rotational axis 42 (e.g., an axial centerline) of the gas turbine engine 22 relative to the engine static structure 32.

The first rotational assembly 38 includes a first shaft 44, a bladed compressor rotor 46 for the compressor section 26, and a bladed first turbine rotor 48 for the high-pressure turbine section 30A. The first shaft 44 interconnects the bladed first compressor rotor 46 and the bladed first turbine rotor 48.

The second rotational assembly 40 includes a second shaft 50 and a bladed second turbine rotor 52 (e.g., a power turbine rotor) for the low-pressure turbine section 30B. The second shaft 50 is connected to the bladed second turbine rotor 52. The second shaft 50 couples the bladed second turbine rotor 52 with a propulsor 54 (e.g., a propeller) of the propulsion system 20. The second shaft 50 of FIG. 2 is coupled to the propulsor 54 by a gear train 56. The gear train 56 of FIG. 2 includes a gear box 58 including a gear assembly (e.g., an epicyclic gear assembly) configured, for example, to drive the propulsor 54 at a reduced rotational speed relative to the second shaft 50. Alternatively, the second shaft 50 may be directed coupled to the propulsor 54 to drive the propulsor 54 at a same rotational speed as the second shaft 50. The gear train 56 of FIG. 2 further includes an accessory gear box (AGB) 60 coupled with the second shaft 50 and configured to drive auxiliary components of the gas turbine engine 22 (e.g., components of the engine oil system 34).

The engine static structure 32 includes one or more engine cases, cowlings, inner fixed structures, and/or other non-rotating structures configured to house and/or support components of the gas turbine engine sections 26, 28, 30. The engine static structure 32 further includes one or more bearing assemblies configured to rotationally support components of the first rotational assembly 38 and the second rotational assembly 40.

In operation of the gas turbine engine 22, ambient air is directed into (e.g., from an air intake) and through the compressor section 26 along a core flow path C. Air flow along the core flow path C is compressed in the compressor section 26, mixed and burned with fuel in the combustor 36, and the resultant combustion gas is directed through the high-pressure turbine section 30A and the low-pressure turbine section 30B. The bladed first turbine rotor 48 and the bladed second turbine rotor 52 rotationally drive the first rotational assembly 38 and the second rotational assembly 40, respectively, in response to the combustion gas flow through the high-pressure turbine section 30A and the low-pressure turbine section 30B. The second rotational assembly 40 drives rotation of the propulsor 54 to generate thrust for the propulsion system 20.

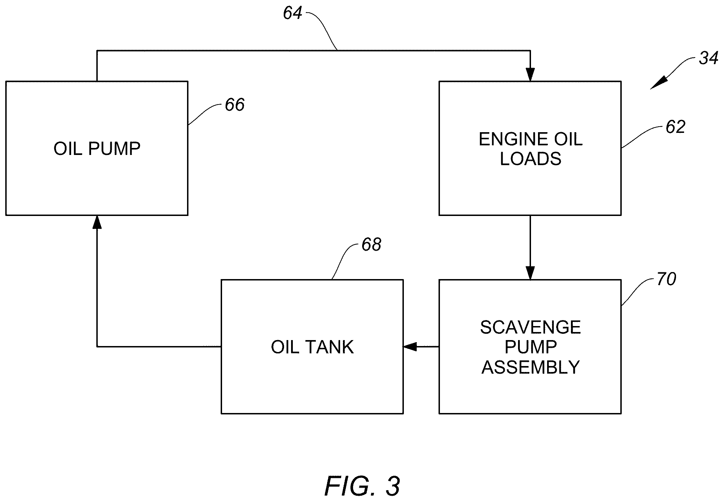

Referring to FIG. 3, the engine oil system 34 is configured to facilitate lubrication and/or cooling for components of the propulsion system 20 and its gas turbine engine 22. FIG. 3 schematically illustrates the engine oil system 34. The present disclosure is not limited to the foregoing exemplary configuration of the engine oil system 34 of FIG. 3, and the engine oil system 34 may include additional and/or alternative oil system components (e.g., tanks, valves, heat exchangers, pumps, conduits, regulators, etc.) suitable for facilitating lubrication and/or cooling for components of the propulsion system 20 and its gas turbine engine 22, referred to herein as engine oil loads 62. The engine oil loads 62 may include, but are not limited to, bearing assemblies, gear train 56 components (e.g., the gear box 58, the accessory gear box 60, etc.), shafts (e.g., the first shaft 44 and the second shaft 50), and the like.

The engine oil system 34 includes an oil flow path 64, an oil pump 66, an oil tank 68, and a scavenge pump assembly 70. The oil pump 66 is configured to circulate oil from the oil tank 68 along the oil flow path 64 to direct (e.g., pump) the oil to the engine oil loads 62 for lubrication and/or cooling of the engine oil loads 62. Oil from the engine oil loads 62 is directed to return to the oil tank 68 by the scavenge pump assembly 70. For example, the scavenge pump assembly 70 may operate to direct (e.g., pump) oil from one or more of the engine oil loads 62, or an oil sump downstream of the engine oil loads 62, to the oil tank 68.

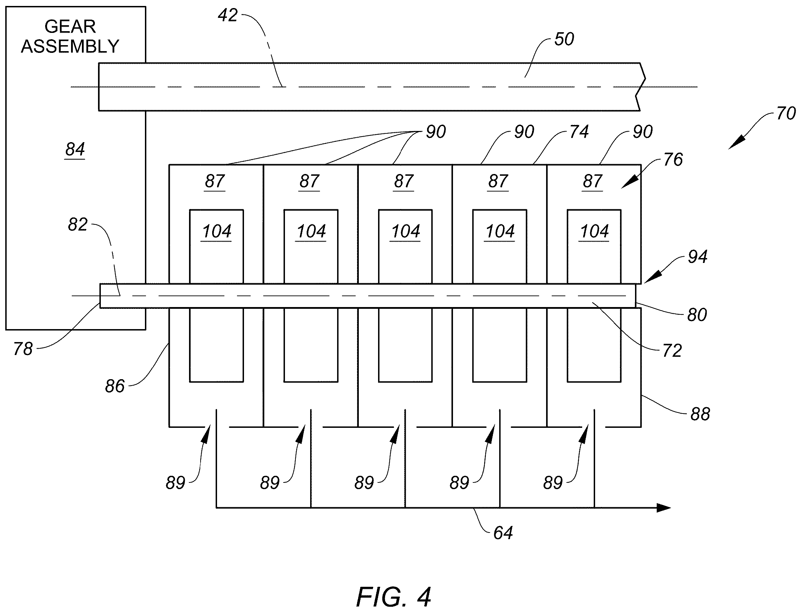

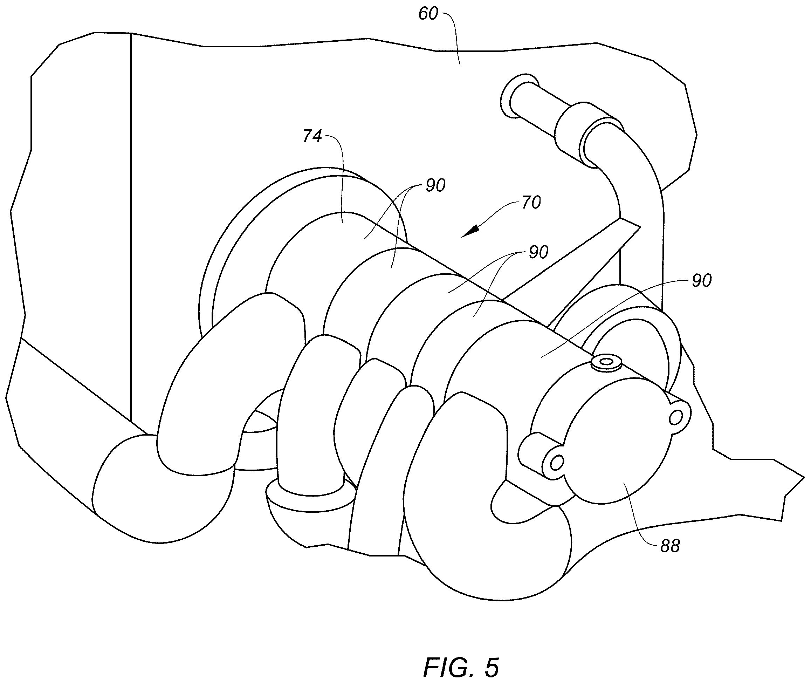

FIG. 4 schematically illustrates a cutaway, side view of the scavenge pump assembly 70. FIG. 5 illustrates a perspective view of an exterior of the scavenge pump assembly 70. The scavenge pump assembly 70 includes a drive shaft 72, a pump housing 74, and a plurality of scavenge pumps 76.

The drive shaft 72 extends between and to a first axial end 78 of the drive shaft 72 and a second axial end 80 of the drive shaft 72 along an axis 82 (e.g., a rotational axis). The drive shaft 72 is rotatable about the axis 82. The drive shaft 72 is coupled with the second shaft 50 by the accessory gear box 60. For example, the drive shaft 72 is coupled with a gear assembly 84 of the accessory gear box 60 at (e.g., on, adjacent, or proximate) the first axial end 78. The drive shaft 72 of FIG. 4 is configured to be rotationally driven about the axis 82 by the second shaft 50 through the gear assembly 84.

The pump housing 74 extends between and to a first axial end 86 of the pump housing 74 and a second axial end 88 of the pump housing 74 along the axis 82. The first axial end 86 may be mounted to or otherwise disposed at (e.g., on, adjacent, or proximate) the accessory gear box 60. The second axial end 88 is disposed at (e.g., on, adjacent, or proximate) the second axial end 80. The pump housing 74 is formed by a plurality of discrete housing body portions 90 axially arranged along the axis 82 between and to the first axial end 86 and the second axial end 88. For example, the housing body portions 90 are mounted together as an axial stack forming the pump housing 74. Each of the housing body portions 90 extends circumferentially about (e.g., completely around) the axis 82.

The pump housing 74 houses the drive shaft 72 and each of the scavenge pumps 76. The pump housing 74 may facilitate rotational support of the drive shaft 72. The pump housing 74 forms a pump cavity 87 for each of the scavenge pumps 76. For example, each of the housing body portions 90 may form and/or circumscribe the pump cavity 87 for a respective one of the scavenge pumps 76 or the pump cavity 87 for more than one of the scavenge pumps 76. The pump cavity 87 of each of the scavenge pumps 76 is connected in fluid communication with the engine oil loads 62 (e.g., one engine oil load 62, a portion of one of the engine oil loads 62, etc.) along the oil flow path 64. The pump housing 74 forms a pump outlet 89 for each of the respective scavenge pumps 76 and pump cavities 87.

Each of the scavenge pumps 76 is driven by rotation of the drive shaft 72. For example, each of the scavenge pumps 76 may include a pump rotor 104 mounted on or otherwise coupled with the drive shaft 72 within the pump cavity 87.

During operation of the gas turbine engine 22 and its engine oil system 34, the gas turbine engine 22 (e.g., the second shaft 50) drives rotation of the drive shaft 72 through the gear train 56 (e.g., the gear box 58 and the accessory gear box 60). This rotation of the drive shaft 72 drives the scavenge pumps 76 (e.g., the pump rotors 104) to direct (e.g., pump) oil from the engine oil loads 62 back to the oil tank 68 along the oil flow path 64, for subsequent use by the engine oil system 34.

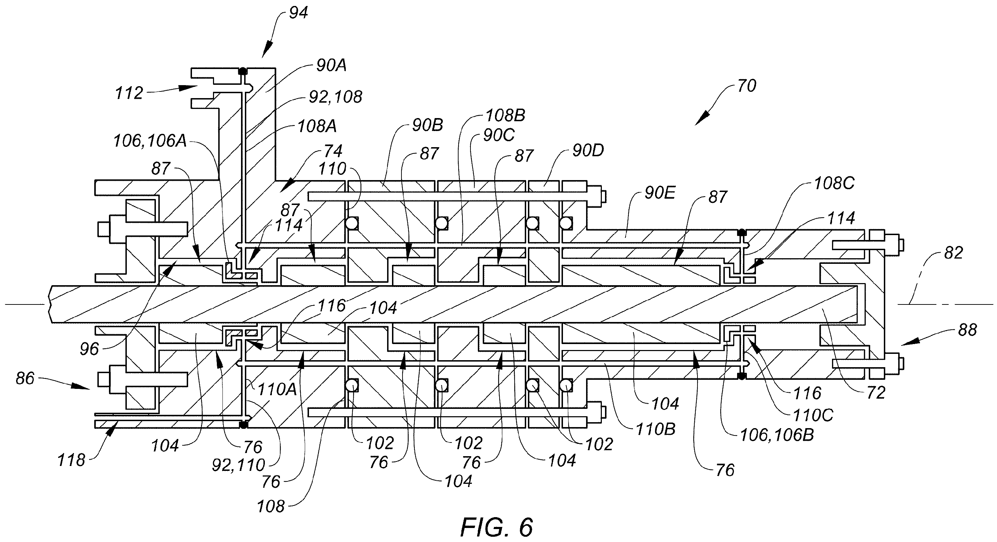

Referring to FIG. 6, the pump housing 74 forms one or more internal oil passages 92 through the pump housing 74. FIG. 6 illustrates a side, cutaway view of the scavenge pump assembly 70 according to some embodiments of the present disclosure. The housing body portions 90 of FIG. 6 are sequentially arranged along the axis 82 as housing body portions 90A-E. The pump housing 74 of FIG. 6 includes five discrete housing body portions 90; however, the present disclosure is not limited to any particular quantity of the housing body portions 90 or to any particular quantity of the scavenge pumps 76 axially stacked along the drive shaft 72 and its axis 82. Each of the housing body portions 90 extends (e.g., radially extends) between and to an outer radial side 94 of the respective one of the housing body portions 90 and an inner radial side 96 of the respective one of the housing body portions 90. Each of the housing body portions 90 extends (e.g., axially extends) between and to a first axial side 98 of the respective one of the housing body portions 90 and a second axial side of the respective one of the housing body portions 90. The housing body portions 90 are axially stacked along the axis 82 such that the first axial side 98 is disposed at (e.g., on, adjacent, or proximate) the second axial side 100 of an axially adjacent one of the housing body portions 90 and/or such that the second axial side 100 is disposed at (e.g., on, adjacent, or proximate) the first axial side 98 of an axially adjacent one of the housing body portions 90.

The pump housing 74 may include a plurality of annular seals 102 (e.g., O-rings) configured to facilitate fluid sealing between axially adjacent housing body portions 90. For example, the seals 102 may be disposed axially between the first axial side 98 and the second axial side 100 of axially adjacent housing body portions 90. The seals 102 extend circumferentially about (e.g., completely around) the axis 82 and are radially positioned between the outer radial side 94 and the inner radial side 96.

The pump housing 74 may include one or more bearings 106 configured to rotationally support the drive shaft 72. The bearings 106 of FIG. 6 are configured as journal bearings; however, the present disclosure is not limited to this foregoing exemplary configuration of the bearings 106. Each of the bearings 106 may be supported by one of the housing body portions 90 and positioned in contact (e.g., rolling contact) with the drive shaft 72 and/or the pump rotor 104 of one or more of the scavenge pumps 76. For example, the bearings 106 of FIG. 6 include a first axial bearing 106A mounted on the housing body portion 90A at (e.g., on, adjacent, or proximate) the inner radial side 96 and a second axial bearing 106B mounted on the housing body portion 90E at (e.g., on, adjacent, or proximate) the inner radial side 96.

The internal oil passages 92 of FIG. 6 include a bearing supply passage 108 and a bearing return passage 110. The bearing supply passage 108 and the bearing return passage 110 are formed by and extend through the housing body portions 90, 90A-E.

The bearing supply passage 108 of FIG. 6 extends through the housing body portions 90, 90A-E from a passage inlet 112 of the bearing supply passage 108 to, for each of the bearings 106, a passage outlet 114 of the bearing supply passage 108. As an example, the bearing supply passage 108 of FIG. 6 includes a first passage segment 108A, a second passage segment 108B, and a third passage segment 108C forming the bearing supply passage 108. The first passage segment 108A extends (e.g., radially extends) through the housing body portion 90A from the passage inlet 112 to the passage outlet 114 at (e.g., on, adjacent, or proximate) the inner radial side 96 and the first axial bearing 106A. The second passage segment 108B extends (e.g., axially extends) through each of the housing body portions 90, 90A-E from the first segment portion 108A to the third segment portion 108C. In other words, each of the housing body portions 90, 90A-E forms an axial portion of the second passage segment 108B, which housing body portions 90, 90A-E and axial portions are aligned to form the second passage segment 108B extending between and to the first passage segment 108A and the third passage segment 108C. The second passage segment 108B extends through the housing body portions 90, 90A-E radially within the seals 102, for example, radially between the seals 102 and the inner radial side 96 of each of the housing body portions 90, 90A-E. The third passage segment 108C extends (e.g., radially extends) through the housing body portion 90E from the second passage segment 108B to the passage outlet 114 at (e.g., on, adjacent, or proximate) the inner radial side 96 and the second axial bearing 106B.

The bearing return passage 110 of FIG. 6 extends through the housing body portions 90, 90A-E from a passage inlet 116 of the bearing return passage 110, for each of the bearings 106, to a passage outlet 118 of the bearing return passage 110. As an example, the bearing return passage 110 of FIG. 6 includes a first passage segment 110A, a second passage segment 110B, and a third passage segment 110C forming the bearing return passage 110. The first passage segment 110A extends (e.g., radially extends) through the housing body portion 90A from the passage outlet 118 to the passage inlet 116 at (e.g., on, adjacent, or proximate) the inner radial side 96 and the first axial bearing 106A. The second passage segment 110B extends (e.g., axially extends) through each of the housing body portions 90, 90A-E from the first segment portion 110A to the third segment portion 110C. In other words, each of the housing body portions 90, 90A-E forms an axial portion of the second passage segment 110B, which housing body portions 90, 90A-E and axial portions are aligned to form the second passage segment 110B extending between and to the first passage segment 110A and the third passage segment 110C. The second passage segment 110B extends through the housing body portions 90, 90A-E radially within the seals 102, for example, radially between the seals 102 and the inner radial side 96 of each of the housing body portions 90, 90A-E. The third passage segment 110C extends (e.g., radially extends) through the housing body portion 90E from the second passage segment 110B to the passage inlet 116 at (e.g., on, adjacent, or proximate) the inner radial side 96 and the second axial bearing 106B.

During operation of the gas turbine engine 22 and its engine oil system 34, the bearing supply passage 108 receives a pressurized supply of oil through the passage inlet 112 and directs the oil through the bearing supply passage 108 (e.g., the segments 108A-C) to the bearings 106. For example, the bearing supply passage 108 may receive the pressurized supply of oil from the accessory gear box 60 (e.g., oil supplied to the accessory gear box 60 from the engine oil system 34) or from an upstream portion of the engine oil system 34. The oil lubricates and cools the bearings 106 and is directed through the bearing return passage 110 (e.g., the segments 110A-C) from the bearings 106 to the passage outlet 118. Oil from the passage outlet 118 may be directed into the accessory gear box 60 (e.g., a sump of the accessory gear box 60) and subsequently returned to the engine oil system 34 (e.g., the oil tank 68) by operation of the scavenge pump assembly 70.

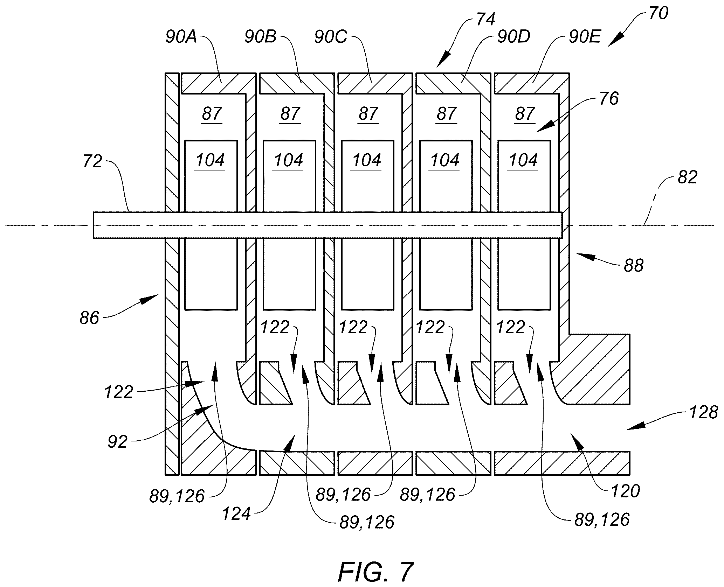

FIG. 7 illustrates a side, cutaway view of the scavenge pump assembly 70 and its internal oil passages 92 according to some embodiments of the present disclosure. The housing body portions 90 of FIG. 7 are sequentially arranged along the axis 82 as the housing body portions 90A-E, as discussed above. The internal oil passages 92 of FIG. 7 include a scavenge return manifold passage 120. The scavenge return manifold passage 120 is formed by and extends through the housing body portions 90, 90A-E. The scavenge pump assembly 70 may include the scavenge return manifold passage 120 in combination with or independent other internal oil passages 92, such as the passages 108, 110 (see FIG. 6).

The scavenge return manifold passage 120 includes a plurality of inlet passage segments 122 and a common outlet passage segment 124 formed by the housing body portions 90, 90A-E. Each of the inlet passage segments 122 may be formed by one of the housing body portions 90, 90A-E. Each of the inlet passage segments 122 includes a manifold inlet 126 of the scavenge return manifold passage 120 disposed at (e.g., on, adjacent, or proximate) and connected in fluid communication with the pump outlet 89 of a respective one of the scavenge pumps 76. Each of the inlet passage segments 122 extends between and to the manifold inlet 126 and the common outlet passage segment 124. The common outlet passage segment 124 includes a manifold outlet 128 of the scavenge return manifold passage 120, for example, at (e.g., on, adjacent, or proximate) an exterior of the pump housing 74. The common outlet passage segment 124 extends (e.g., axially extends) through each of the housing body portions 90, 90A-E from each of the inlet passage segments 122 to the manifold outlet 128. **In** other words, each of the housing body portions 90, 90A-E forms an axial portion of the common outlet passage segment 124, which housing body portions 90, 90A-E and axial portions are aligned to form the common outlet passage segment 124 extending between and to the inlet passage segments 122 and the manifold outlet 128.

During operation of the gas turbine engine 22 and its engine oil system 34, rotation of the drive shaft 72 drives the scavenge pumps 76 (e.g., the pump rotors 104) to direct (e.g., pump) oil from the engine oil loads 62 back to the oil tank 68 through the scavenge return manifold passage 120. Each of the scavenge pumps 76, sequentially arranged along the scavenge return manifold passage 120 in an axial direction relative to the axis 82, pump oil into the common outlet passage segment 124 through the respective inlet passage segments 122.

In at least some conventional engine oil systems, fluid (e.g., oil) interconnections with a scavenge pump assembly are made by a plurality of external conduits (e.g., pipes, tubes, hoses, etc.) extending between the scavenge pump housing and other components of the engine or the engine oil system. These external conduits may significantly increase a footprint of the scavenge pump assembly within the engine, as well as a weight and complexity of the engine oil system. The present disclosure scavenge pump assembly 70 facilitates a reduction in a quantity and footprint of these external conduits by forming the internal oil passages 92 with the pump housing 74 (e.g., the housing body portions 90), thereby facilitating the conveyance of oil to and from different scavenge pumps 76, bearings 106, cavities, and other portions of the scavenge pump assembly 70 within the enclosure of the pump housing 74. While the present disclosure internal oil passages 92 are described herein using examples of the internal oil passages 92 (e.g., the passages 108, 110, 120) above, the present disclosure is not limited to the foregoing exemplary internal oil passages 92, and aspects of the present disclosure may include other fluid (e.g., oil) passages formed by and through a plurality of housing body portions (e.g., the housing body portions 90) of a scavenge pump housing, such as the scavenge pump housing 74 for the scavenge pump assembly 70.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An engine (22) for an aircraft propulsion system (20), the engine (22) comprising:
an engine oil system (34) including a pump assembly (70) forming a portion of an oil flow path (64) through the engine oil system (34), the pump assembly (70) including a drive shaft (72), a plurality of pumps (76), and a pump housing (74),
the drive shaft (72) extending along a first rotational axis (82),
the plurality of pumps (76) arranged axially along the first rotational axis (82), each of the plurality of pumps (76) including a pump rotor (104) coupled with the drive shaft (72), and
the pump housing (74) extending along the first rotational axis (82) between a first housing end (86) and a second housing end (88), the pump housing (74) circumscribing and housing the drive shaft (72) and the plurality of pumps (76) between the first housing end (86) and the second housing end (88), the pump housing (74) including a plurality of housing body portions (90; 90A-E) axially stacked along the first rotational axis (82) to form the pump housing (74), the plurality of housing body portions (90; 90A-E) collectively forming an internal oil passage (92) through the pump housing (74).

2. The engine of claim 1, further comprising an engine rotational assembly (38) including an engine shaft (50) and a rotor (52), the rotor (52) coupled with the engine shaft (50), the engine rotational assembly (38) rotatable about a second rotational axis (42), the engine shaft (50) coupled with the drive shaft (72).

3. The engine of claim 2, further comprising a gear train (84) coupling the drive shaft (72) with the engine shaft (50).

4. The engine of any preceding claim, wherein the plurality of housing portions (90; 90A-E) form the internal oil passage (92) extending axially through each of the plurality of housing portions (90; 90A-E).

5. The engine of any preceding claim, wherein the pump housing (74) forms a pump cavity (87) for the pump rotor (104) of each of the plurality of pumps (76), and the internal oil passage (92) is disposed radially outward of the pump cavity (87) for the pump rotor (104) of each of the plurality of pumps (76).

6. The engine of claim 5, wherein the internal oil passage (92) is connected in fluid communication with the pump cavity (87) for the pump rotor (104) of each of the plurality of pumps (76).

7. The engine of any preceding claim, wherein the pump housing (74) includes a first bearing (106A) mounted on a first housing body portion (90A) of the plurality of housing body portions (90; 90A-E), the first bearing (106A) rotationally supports the drive shaft (72), and the internal oil passage (92) is connected in fluid communication with the first bearing (106A).

8. The engine of claim 7, wherein the internal oil passage (92) includes a first passage segment (110A) and a second passage segment (110B), the first passage segment (110A) extends radially through the first housing body portion (90A) and is connected in fluid communication with the first bearing (106A), and the second passage segment (110B) extends axially through each of the plurality of housing body portions (90; 90A-E) and is connected in fluid communication with the first passage segment (110A).

9. The engine of claim 7 or 8, wherein the pump housing includes a second bearing (106B) mounted on a second housing body portion (90B) of the plurality of housing body portions (90; 90A-E), the second bearing (106B) rotationally supports the drive shaft (72), and the internal oil passage (92) is connected in fluid communication with the second bearing (106B).

10. The engine of any preceding claim, wherein the pump housing (74) includes a plurality of annular seals (102), each of the plurality of annular seals (102) is positioned axially between each axially adjacent pair of the plurality of housing body portions (90; 90A-E), and the internal oil passage (92) extends axially through each of the plurality of housing body portions (90; 90A-E) radially inside of the plurality of annular seals (102).

11. The engine of claim 1, wherein:
the plurality of housing body portions (90; 90A-E) form a pump cavity (87) for the pump rotor (104) of each of the plurality of pumps (76); and
the internal oil passage (92) is disposed radially outward of the pump cavity (87) for the pump rotor (104) of each of the plurality of pumps (76).

12. The engine of claim 11, wherein the internal oil passage (92) extends to an exterior of the pump housing (74).

13. The engine of claim 1, wherein the internal oil passage (92) includes a plurality of passage segments (110A-C), at least one of the plurality of passage segments (110A-C) extending axially through the plurality of housing body portions (90; 90A-E).

14. The engine of claim 13, wherein at least one of the passage segments (110A-C) extends to an exterior of the pump housing (74).

15. The engine of claim 13 or 14, wherein the pump housing (74) forms a pump cavity (87) for the pump rotor (104) of each of the plurality of pumps (76), and each of the passage segments (110A-C) is disposed radially outward of the pump cavity (87) for the pump rotor (104) of each of the plurality of pumps (76).
